# EUROPEAN PATENT SPECIFICATION

(11) **EP 3 249 102 B1**
(45) Date of publication and mention of the grant of the patent: **06.01.2021**
(21) Application number: 16864447.4
(22) Date of filing: 12.08.2016
(51) Int. Cl.: E02B 3/06, E02B 3/12

(54) **WAVE ABSORBING BLOCK FOR BREAKING WAVES**
WELLENABSORBIERENDER BLOCK ZUM DÄMPFEN VON WELLEN
BLOC ABSORBANT LES VAGUES POUR DÉFERLANTES

(30) Priority: 13.11.2015 KR 20150159607
(43) Date of publication of application: 29.11.2017
(73) Proprietor: Song, Woon-Yong, Seoul 08282 (KR)
(72) Inventor: Song, Woon-Yong, Seoul 08282 (KR)
(74) Representative: Louis Pöhlau Lohrentz
(86) International application number: PCT/KR2016/008906
(87) International publication number: WO 2017/082521

(56) References cited:
- WO-A1-2008/111561
- JP-A- S5 258 231
- JP-A- 2013 147 904
- JP-U- H04 126 927
- KR-A- 20150 065 650
- KR-B1- 101 091 099
- KR-Y1- 790 001 815
- US-A- 2 766 592
- US-A- 2 900 699
- US-A- 4 347 017

## Description

### [Technical Field]

The present invention relates to a wave absorbing block for breaking waves, more particularly, to a wave absorbing block that is placed as an armor block on the external surface of harbor facilities, such as a breakwater, revetment, etc., which are constructed to block incoming waves from the open sea, for absorbing and extinguishing waves, wherein the wave absorbing block protects internal elements of a breakwater, including riprap, armor stone and middle armor block, etc., and prevents the breakwater from collapsing or being destructed by waves so that the breakwater can perform its function.

### [Background Art]

A harbor operation rate is affected by waves entering into a harbor from the open sea, overtopping-waves entering into a harbor beyond the breakwater, and reflected-waves generated from the wall of the harbor. It is possible to reduce waves entering into a harbor from the open sea by properly arranging a breakwater and to reduce overtopping-waves by increasing the crest height of breakwater.

The breakwater is a costal structure for absorbing waves from the open sea, ensuring safety of anchored ships by maintaining a harbor tranquility of inland sea, and protecting water zones and harbor facilities from waves. There are various types of breakwater structures such as a rubble mound breakwater and vertical face breakwater, depending on water depth, foundation ground or the nature and size of waves.

Specially, in order to construct a rubble mound breakwater, wave absorbing blocks must be easily constructed and can protect shore facilities near a coastal line by effectively absorbing waves coming from the open sea, therefore it is necessary to develop structures of breakwater with environmentally friendly and beautiful scenery from which everyone can easily access to sea.

Accordingly, it is urgently required to develop a wave absorbing block that can effectively protect shore facilities by effectively absorbing incoming waves from the open sea, ensure safety of ships navigating in a coastal area, is highly hydrophilic and stable, and has an easily constructible structure.

In addition, conventional revetments such as masonry revetments or concrete block revetments have been constructed to prevent coastal erosion caused by incoming waves from the open sea. However, they cannot effectively absorb incoming waves from the open sea. In addition, sediment, namely sand, deposited on the coastal line due to a revetment can be washed off. Furthermore, since a conventional tetrapod wave absorbing block has a cylindrical shape, a vertex is rarely generated at the time of a tidal current, thereby resulting in poor adhesion of underwater creatures to the wave absorbing block. Therefore, the conventional wave absorbing block is often criticized for environment-unfriendly the coast.

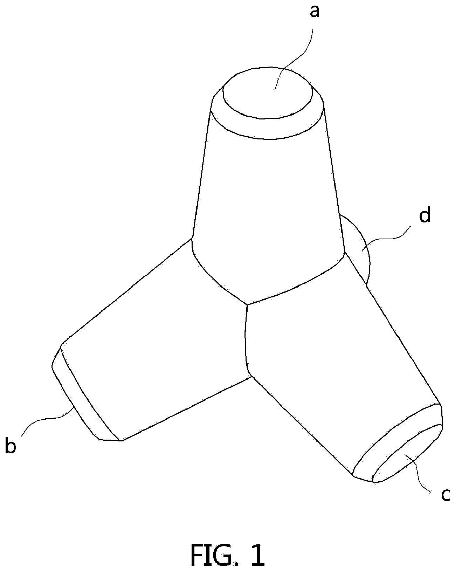

In case of conventional wave absorbing blocks which have four horns protruding in four direction, since a ready-mixed concrete (RMC) is poured in a direction of a portion (a) of FIG. 1, it is difficult to reliably supply and place concrete to portions (b), (c) and (d) of FIG. 1. For this reason, conventional wave absorbing blocks are manufactured at high cost, have poor durability, and are easily damaged at the portions (b), (c) and (d) of FIG. 1 after being manufactured

Further, in case of the wave absorbing blocks, the function of wave absorbing is determined by the tapered shape in which the central portion is thick and the size of the cylinder becomes gradually thinner toward a distal end of each horn portion. In other words, a hydraulic performance affecting a wave absorbing function, a performance of reducing quantity of overtopping by weakening a wave run-up, an interlocking performance among blocks placed on a breakwater, robustness in terms of withstanding strong external force, structural simplicity for mass production, cost effectiveness, constructability, stability against wave action, etc. vary for each wave absorbing block. US-A-2 900 699 discloses a wave absorbing block for breaking waves having the features of the preamble of claim 1.

There is a contradiction that a wave absorbing block usually exhibits high performances for some items but low performances for some other items. Therefore, developing a wave absorbing block having overall excellent performance is desperately needed.

### [Disclosure]

### [Technical Problem]

An object of the present invention is, for the purpose of solving the conventional problems by taking all the circumstances into consideration, to provide a wave absorbing block for breaking waves, which being balanced in various performances and having an overall excellent performance, thereby reducing a construction cost and time for harbor facilities such as a breakwater and optimizing the function of the breakwater.

### [Technical Solution]

In order to accomplish the above object, the present invention provides a wave absorbing block for breaking waves, the wave absorbing block being according to claim 1, and in particular comprising: a pair of left and right legs having a concavely curved arch portion at a front center thereof, and projecting sideways to have inclined side portions respectively on left and right sides thereof; and
a column part unified with the pair of left and right legs and vertically protruding upward from a center portion of an upper surface of the arch portion. A recess that is passing through the front and rear surface and inclined leftward and rightward is formed at the center portion of the bottom of the pair of left and right legs. The width of the recess is formed to be wider than the sectional width of column part, so that when the wave absorbing blocks are placed in two layers, with each wave absorbing block in a first layer being supported on the end of the left and right legs and a forward edge of the column part, the first-layer wave absorbing block can properly interlock with the second-layer wave absorbing block, and waves can flow over the inclined surface of the rear side of the wave absorbing block to fall into a gap provided in front of the arch portion to dissipate wave energy using gravity.

According to an embodiment, the inclination angle of each inclined side portion is 40° to 50° from the rear to the front surface of the pair of left and right legs.

According to another embodiment, the cross-section of the pair of left and right legs of the present invention is formed of anyone selected from a rectangular, a hexagonal, an octagonal, or a circular shape.

According to a further embodiment, the cross-section of the column part of the present invention is formed of anyone selected from a rectangular, a hexagonal, an octagonal, or a circular shape.

According to a yet further embodiment, inclined haunch portions are formed at the left and right boundaries between the pair of left and right legs and the column part of the present invention.

According to a yet further embodiment of the present invention, a rear inclined portion is formed at the boundary between a rear surface and a bottom surface of a center portion of the pair of left and right legs.

According to a yet further embodiment of the present invention, a recess that is passing through the front and rear surface and inclined leftward and rightward is formed at the center portion of the bottom of the pair of left and right legs.

According to a yet further embodiment of the present invention, boundaries between each front surface and the arch portion of the pair of left and right legs, boundaries between each front surface and each side surface of the pair of left and right legs, and boundaries between each side surface and each inclined side portion of the pair of left and right legs are formed with rounded portions.

According to a yet further embodiment of the present invention, chamfered portions are formed at edges of an upper surface of the column part and each corner of the square circumferential side surfaces of the column part.

### [Advantageous Effects]

The wave absorbing block for breaking waves of the present invention has two legs and a single column. When it is placed at the external surface of a breakwater consisting of riprap (an innermost layer) and armor stone (a middle armor layer) or small blocks, it has an effect of protecting the breakwater from waves when the breakwater blocks waves coming toward a harbor from the open sea, so that the breakwater can perform its function.

Further, the wave absorbing block for breaking waves of the invention that is placed on the external surface of a breakwater has another effect of dissipating waves by generating reflection, refraction, and/or resonance of waves which are basic principles used to effectively dissipate wave energy when hit by waves.

In addition, the wave absorbing block for breaking waves of the invention exhibits a sufficient wave absorbing performance with respect to a predetermined scale wave even with a smaller volume compared with conventional wave absorbing blocks. Therefore, the wave absorbing block for breaking waves of the invention can dramatically reduce construction costs and time. Furthermore, since it can be manufactured with the use of relatively small equipment, it can be mass-produced even in a small construction site.

### [Description of Drawings]

FIG. 1 is a perspective view illustrating a conventional wave absorbing block for breaking waves;
FIGS. 2A and 2B are respectively a front view and a rear view illustrating a wave absorbing block for breaking waves, according to the embodiment of the invention;
FIGS. 3A to 3F are respectively a front view, a rear view, a plan view, a bottom view, and a side view illustrating a wave absorbing block for breaking waves, according to the embodiment of the invention;
FIG. 4A is a side view illustrating a state in which the wave absorbing block for breaking waves according to the embodiment of the invention is mounted in an inclined manner;
FIG. 4B is a plan view illustrating a state in which the wave absorbing block for breaking waves, according to the embodiment of the invention, is placed in an inclined manner;
FIG. 5 is a partial perspective view illustrating a state in which a structure is constructed using the wave absorbing blocks according to the embodiment of the invention;
FIG. 6 is a side view illustrating a state in which the wave absorbing blocks according to the embodiment of the invention are placed on a breakwater; and
FIG. 7 is a bird's-eye view illustrating a state in which the wave absorbing blocks according to the embodiment of the invention are placed on a breakwater.

**<Description of reference numerals>**

| | |
|---|---|
| 10: arch portion | 12: inclined side portion |
| 14: pair of left and right legs | 16: column part |
| 18: haunch portion | 20: rear inclined portion |
| 22: recess | 24: rounded portion |
| 26: chamfered portion | 40: cap-concrete |
| 41: armor stone | 42: internal riprap |
| 43: sea water surface | 44: foundation bed |

### [Mode for Invention]

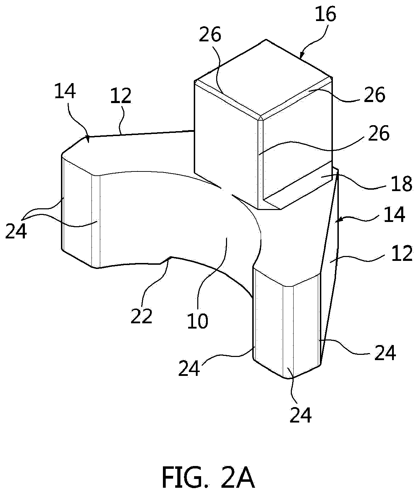

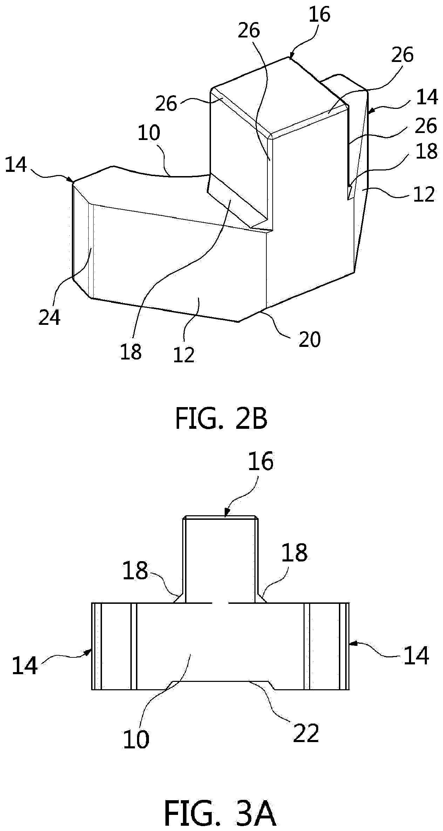

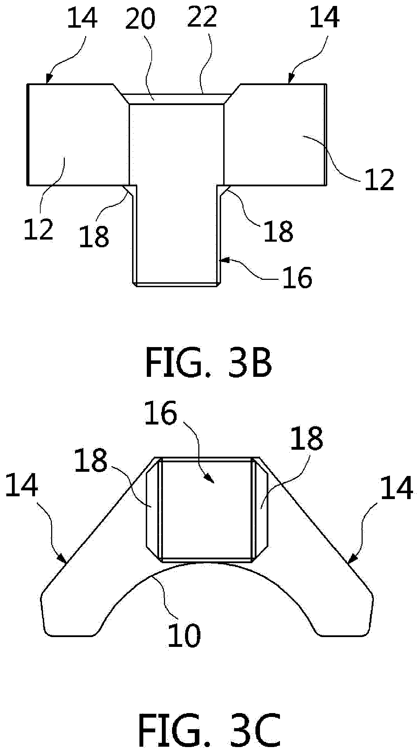

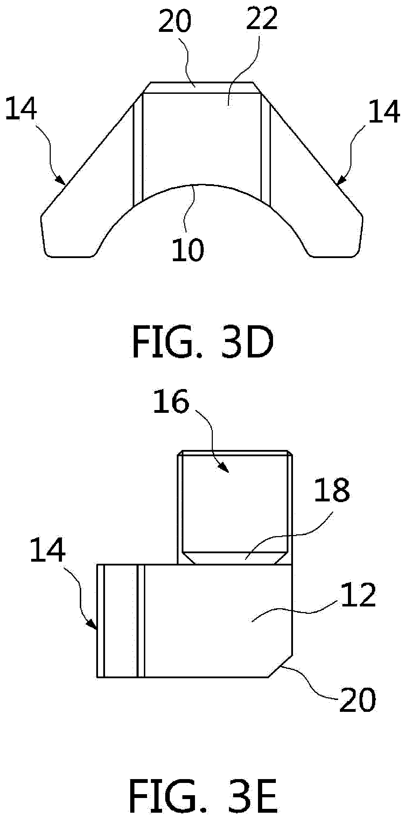

Hereinafter, embodiments of the invention will be described in detail with reference to Figs. 2 to 7.

A wave absorbing block for breaking waves of the present invention comprises: a pair of left and right legs (14) having a concavely curved arch portion (10) at a front center thereof, and projecting sideways to have inclined side portions (12) respectively on left and right sides thereof; and

a column part (16) unified with the pair of left and right legs (14) and protruding vertically upward from a center portion of an upper surface of the arch portion (10).

The arch portion (10), a curved portion, is formed at the front center portion of the pair of left and right legs (14) to prevent cracking due to wave pressure, by interlocking with adjacent wave absorbing blocks and creating spaces therein, and to dissipate wave energy using resonance of waves.

The inclined side portions (12) are formed to be inclined forward from the rear to front surface of the pair of left and right legs (14) at a predetermined inclination angle so that first-layer wave absorbing blocks can properly interlock with second-layer wave absorbing blocks when the wave absorbing blocks of the invention are placed in two layers. The inclination angle may be preferably adjusted within a range of 40° to 50° in consideration of the size of waves and the number of wave absorbing blocks placed per unit area.

The pair of left and right legs (14) are symmetrically formed in an arch shape with the arch portion (10) therebetween so that the wave absorbing block is not deviated from the position by a wave pressure and maintains a shape mounted on armor stones (41) when big waves hit the wave absorbing block.

At this time, the cross-section of the pair of left and right legs (14) is formed of anyone selected from a rectangular, a hexagonal, an octagonal, or a circular shape.

The column part (16) is formed to be protruded from the center portion of the upper surface of the arch portion (10), thereby dispersing incoming waves from the sea side into the pair of left and right legs (14) and dissipating wave energy by refracting the waves. At the same time, the column part (16) induces the waves such that the waves can flow over the inclined surface of the wave absorbing block to fall into a gap provided in front of the arch portion (10) to dissipate wave energy using gravity.

At this time, the cross-section of the column part (16) is formed of anyone selected from a rectangular, a hexagonal, an octagonal, or a circular shape.

Inclined haunch portions (18) are formed at the left and right boundaries between the pair of left and right legs (14) and the column part (16), to prevent damages such as cracking due to the wave pressure by increasing stiffening force. Preferably, the inclined haunch portion (18) has an inclination angle of 45°.

A rear inclined portion (20) is formed at a boundary between the rear surface and the bottom surface of the center portion of the pair of left and right legs (14), to facilitate placement operation and security of space, and induce a soft flow of waves, thereby refracting waves to dissipate wave energy. Preferably, the rear inclined portion (20) has an inclination angle of 45°.

A recess (22) that is passing through the front and rear surface and inclined leftward and rightward is formed at the center portion of the bottom of the pair of left and right legs (14) to provide a space for demolding and carrying the wave absorbing block and to facilitate the interlocking with each wave absorbing block.

The width of the recess (22) is formed to be wider than the sectional width of column part (16) so that when the wave absorbing blocks are placed in two layers, the first-layer wave absorbing block can properly interlock with the second-layer wave absorbing block

The recess (22) has a predetermined depth such that a fork of a fork lifter or a wire rope of crane can be inserted through the recess (22) when pulling up a wave absorbing block to remove the bottom mold from a wave absorbing block after placing and curing concrete in the mold during a wave absorbing block manufacturing process in a factory.

Boundaries between the arch portion (10) and the front surfaces of the pair of left and right legs (14), boundaries between the front surfaces and side surfaces of the pair of left and right legs (14), and boundaries between the side surfaces and the inclined side portions (12) are formed with rounded portions (24) to prevent damage when hit by waves or an object and to dissipate wave energy by inducing waves to softly flow over and refracting the waves.

Chamfered portions (26) are formed at edges of an upper surface of the column part (16) and each corner of the square circumferential side surfaces of the column part (16) to prevent damage when hit by waves or an object and to dissipate wave energy by inducing waves to softly flow over and refracting the waves.. Preferably, the chamfered portion (26) has an inclination angle of 45°.

Hereinafter, operation and effect of the wave absorbing block for breaking waves of the present invention will be described.

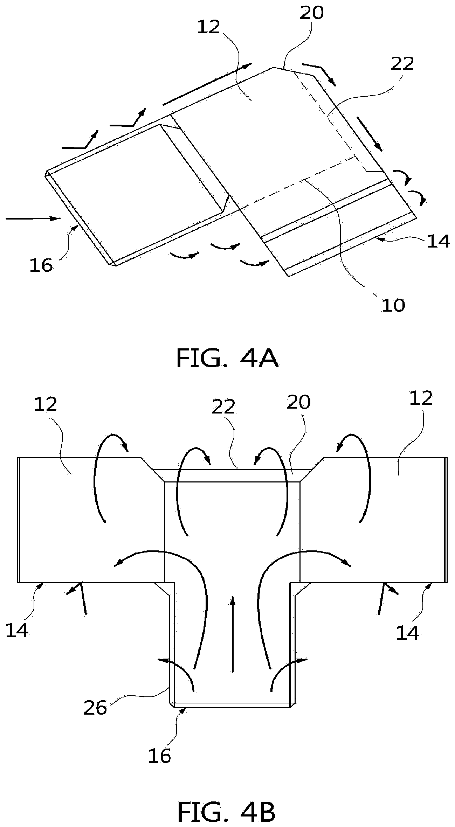

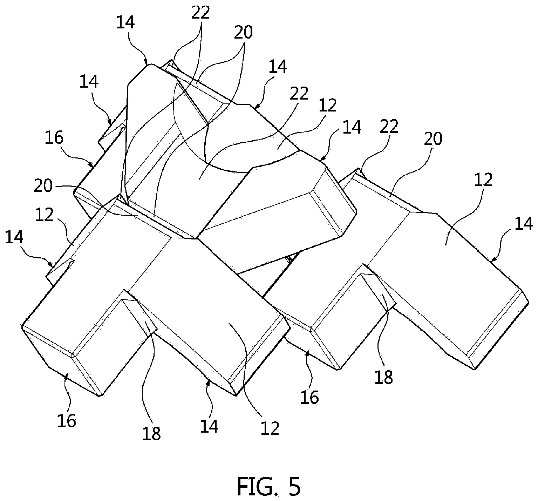

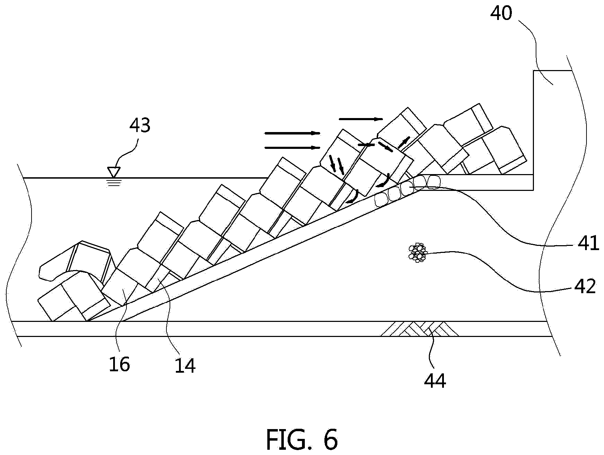

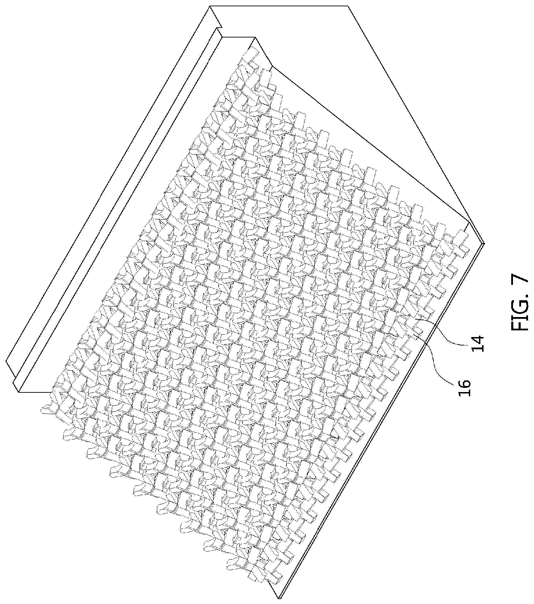

When the wave absorbing blocks of the present invention are placed in two layers as illustrated in FIG. 5 and specially in an inclined manner, to be adjacent to each other in a vertical direction and a horizontal direction, continuously, on a breakwater as illustrated in FIGS. 6 and 7, the column part (16) and the pair of left and right legs (14) of the wave absorbing block induce waves surging from a sea water surface (43) to directions indicated by arrows illustrated in FIGS. 4A and 4B, thereby reflecting and refracting the waves and causing the waves to successively hit the surfaces of adjacent wave absorbing blocks, resulting in the waves being dispersing and dissipating energy efficiently.

That is, once waves surging from the water surface (43) hit the column part (16) of a first-layer wave absorbing block, a portion of the waves rises along the inclined surfaces of the column part (16) and the pair of left and right legs (14), changes its direction along the rear inclined portion (12), and falls down due to gravity, thereby dissipating its wave energy. On the other hand, the other portion of the waves hits the pair of left and right legs (14), which face down, and is then reflected or refracted downward or toward adjacent wave absorbing blocks, thereby weakening or dissipating its energy.

As illustrated in FIG. 4A, the waves entering into a bottom space formed by the column part (16) and the pair of left and right legs (14), and a space of the arch portion (10), create a vortex and cause resonance. As a result, the energy of the waves is dissipated.

In this case, since the arch portion (10) has an arch structure at the center of the pair of left and right legs (14) so as not to generate tension stress, and has an effect of dispersing the wave pressure, cracks due to waves is not created even if high waves hit the wave absorbing block.

The column part (16) prevents the wave absorbing block from being deviated or damaged by the wave pressure of a high wave when the high wave surges to hit the wave absorbing block, and induces resonance and reflection of waves to dissipate wave energy by securing a suitable porosity between the surface of an armor stone (41) and the wave absorbing blocks.

Since a space between the column parts (16) of adjacent wave absorbing blocks acts as a interlocking between a first-layer wave absorbing block and a second-layer wave absorbing when the wave absorbing blocks are placed in two layers. It is possible to prevent the wave absorbing blocks from shaking or being deviated by a wave pressure and an uplift pressure when waves surge to hit the wave absorbing blocks. Thus, the arrangement of the wave absorbing blocks can be maintained, and the armor stones (41) and the internal riprap (42) that are elements constituting a breakwater can be protected.

In case the wave absorbing blocks are placed in two or more layers, the rear inclined portions (20) of the wave absorbing blocks prevents the wave absorbing blocks of each layer from being in tight surface contact with each other by providing an appropriate space therebetween. This structure enables effective placement of the wave absorbing blocks and dissipates wave energy by secondarily breaking waves that have been primarily broken.

Since the rounded portions (24) enable the wave absorbing block to have a good appearance and prevent the occurrence of superior angle. Thus, damage to edges of the wave absorbing blocks during a demolding process and coarse construction, can be prevented. In addition, it is possible to prevent defective wave absorbing blocks, which typically result from imperfect concrete filling of the angled portions, and damage to edges of the wave absorbing block, which is likely to occur when the adjacent wave absorbing blocks collide with each other during placement of the wave absorbing blocks. Furthermore, since adjacent wave absorbing blocks can be very closely placed on a breakwater, it is also possible to prevent the wave absorbing blocks from being damaged by repetitive impacts of wave energy or by friction between the wave absorbing blocks.

Accordingly, the wave absorbing block for breaking waves of the present invention is excellent in a wave absorbing performance and improves robustness, durability, workability, and cost effectiveness when being used for construction of harbor facilities, such as a breakwater or a revetment

In addition, since the wave absorbing block of the present invention is excellent in interlocking and hydraulic performances, the wave absorbing block exhibits a sufficient performance under medium-size waves in a state in which the wave absorbing blocks are placed only in a single layer. Therefore, it is possible to reduce construction costs.

Since the wave absorbing block of the present invention has a simple shape, it is suitable for mass production. Furthermore, since the wave absorbing block is excellent in convenient constructability for a breakwater, such as manufacture, transport and placement, the present invention is easily applicable to harbor construction.

The present invention should not be limited to the embodiments described above, but rather can be modified or altered within the scope of the appended claims.

## Claims

1. A wave absorbing block for breaking waves, the wave absorbing block comprising:
A pair of left and right legs (14) having a concavely curved arch portion (10) at a front center thereof, and projecting sideways to have inclined side portions (12) respectively on left and right sides thereof; and a column part (16) unified with the pair of left and right legs (14) and protruding vertically upward from a center portion of an upper surface of the arch portion (10), **characterized in that** a recess (22) that is passing through the front and rear surface and inclined leftward and rightward is formed at the center portion of the bottom of the pair of left and right legs (14), wherein the width of the recess (22) is formed to be wider than the sectional width of column part (16), so that when the wave absorbing blocks are placed in two layers, with each wave absorbing block in a first layer being supported on the end of the left and right legs (14) and a forward edge of the column part (16), the first-layer wave absorbing block can properly interlock with the second-layer wave absorbing block, and waves can flow over the inclined surface of the rear side of the wave absorbing block to fall into a gap provided in front of the arch portion (10) to dissipate wave energy using gravity.

2. The wave absorbing block for breaking waves according to claim 1, wherein the inclined angle of the inclined side portions (12) is a range of 40° to 50° forward from the rear to front surface of the pair of left and right legs (14).

## Patentansprüche

1. Wellenabsorbierender Block zum Brechen von Wellen, wobei der wellenabsorbierende Block umfasst:
ein Paar aus einem linken und einem rechten Bein (14), das in der Mitte seiner Vorderseite einen konkav gekrümmten Bogenabschnitt (10) aufweist und das seitlich so vorsteht, dass es an seiner linken bzw. rechten Seite geneigte Seitenabschnitte (12) aufweist; und ein Säulenteil (16), das mit dem Paar aus einem linken und einem rechten Bein (14) eine Einheit bildet und von einem Mittenabschnitt einer oberen Oberfläche des Bogenabschnitts (10) vertikal nach oben vorsteht, **dadurch gekennzeichnet, dass** eine Aussparung (22), die die Vorder- und Rückseite durchläuft und nach rechts und nach links geneigt ist, an dem Mittenabschnitt der Unterseite des Paares aus einem linken und einem rechten Bein (14) gebildet ist, wobei die Breite der Aussparung (22) derart gebildet ist, dass sie breiter ist als die Querschnittsbreite des Säulenteils (16), so dass dann, wenn die wellenabsorbierenden Blöcke in zwei Schichten positioniert sind, wobei jeder wellenabsorbierende Block in einer ersten Schicht auf dem Ende des linken und des rechten Beins (14) und einer Vorderkante des Säulenteils (16) getragen wird, der wellenabsorbierende Block in der ersten Schicht mit dem wellenabsorbierenden Block in der zweiten Schicht richtig ineinandergreifen kann, und Wellen über die geneigte Oberfläche der Rückseite des wellenabsorbierenden Blocks fließen können, um in einen Spalt zu fallen, der vor dem Bogenabschnitt (10) vorgesehen ist, um unter Ausnutzung der Schwerkraft Wellenenergie zu verteilen.

2. Wellenabsorbierender Block zum Brechen von Wellen nach Anspruch 1, wobei der Neigungswinkel der geneigten Seitenabschnitte (12) von der Rückseite nach vorne zur Vorderseite des Paares aus einem linken und einem rechten Bein (14) ein Bereich von 40° bis 50° ist.

## Revendications

1. Un bloc absorbant les vagues pour déferlantes, le blocs absorbant les vagues comprenant :
une paire de pattes gauche et droite (14) ayant une partie d'arc incurvée de manière concave (10) au niveau de son centre avant, et faisant saillie latéralement pour avoir des parties latérales inclinées (12) respectivement sur leurs côtés gauche et droit ; et une partie de colonne (16) unie à la paire de pattes gauche et droite (14) et faisant saillie verticalement vers le haut à partir d'une partie centrale d'une surface supérieure de la partie d'arc (10), **caractérisé en ce qu'**un évidement (22) qui passe par la surface avant et arrière et incliné vers la gauche et vers la droite, est formé au niveau de la partie centrale du fond de la paire de pattes gauche et droite (14), dans lequel la largeur de l'évidement (22) est formée pour être plus large que la largeur sectionnelle de la partie de colonne (16), de sorte que lorsque les blocs absorbant les vagues sont placés dans deux couches, avec chaque bloc absorbant les vagues dans une première couche qui est supportée sur l'extrémité des pattes gauche et droite (14) et un bord avant de la partie de colonne (16), le bloc absorbant les vagues de première couche peut se verrouiller correctement avec le bloc absorbant les vagues de seconde couche, et les vagues peuvent s'écouler sur la surface inclinée du côté arrière du bloc absorbant les vagues pour tomber dans une espace prévu en face de la partie d'arc (10) pour dissiper l'énergie des vagues à l'aide de la gravité.

2. Le bloc absorbant les vagues pour déferlantes selon la revendication 1, dans lequel l'angle incliné des parties latérales inclinées (12) est dans une plage de 40° à 50° vers l'avant de la surface arrière à la surface avant de la paire de pattes gauche et droite (14).
